# EUROPÄISCHE PATENTSCHRIFT

(11) **EP 1 904 812 B1**
(45) Veröffentlichungstag und Bekanntmachung des Hinweises auf die Patenterteilung: **03.12.2014**
(21) Anmeldenummer: 05782809.7
(22) Anmeldetag: 14.07.2005
(51) Int. Cl.: G01F 1/50, G01P 5/14, G01P 5/16, G01F 1/46

(54) **STAUDRUCKSONDE**
RAM PRESSURE PROBE
SONDE DE PITOT

(43) Veröffentlichungstag der Anmeldung: 02.04.2008
(73) Patentinhaber: systec Controls Mess- und Regeltechnik GmbH, 82178 Puchheim (DE)
(72) Erfinder: BETZ, Oliver, 82194 Gröbenzell (DE)
(74) Vertreter: Braun-Dullaeus, Karl-Ulrich
(86) Internationale Anmeldenummer: PCT/DE2005/001258
(87) Internationale Veröffentlichungsnummer: WO 2007/009409

(56) Entgegenhaltungen:
- EP-A- 0 255 056
- DE-U1-202004 005 482
- US-A- 3 355 946
- US-A- 4 719 806
- US-A- 5 443 075

## Beschreibung

Die Erfindung betrifft eine Staudrucksonde nach den Merkmalen des Oberbegriffs von Anspruch 1.

Bei den bekannten Staudrucksonde, wie beispielsweise in der EP 0198 197 A2 gezeigt, besteht der Nachteil, dass die Öffnungen, welche über einen Kanal mit dem eigentlichen Druckaufnehmer verbunden sind, teilweise entgegen der Strömungsrichtung zeigen und daher Fremdstoffe, die mit der Strömung transportiert werden in diese Öffnungen gelangen können, wodurch der Messwert verfälscht werden kann.

Aufgrund der Anordnung der Öffnungen im Seitenbereich des Kanals, welcher den Druck zum eigentlichen Druckaufnehmer weiterleitet, ist es äußerst unwahrscheinlich, dass die Fremdstoffe von selbst wieder aus dem Kanal gelangen. Es ist vielmehr sehr wahrscheinlich, dass die Fremdstoffe auf Dauer im Kanal verbleiben und permanent das Messergebnis verfälschen.

Das US-A- 4 719 808 zeigt eine Staudrucksonde mit zwei Kanälen, deren Öffnungen auf unterschiedlichem Niveau angeordnet sind, ohne Differenzdruckerhöher zwischen den Öffnungen. Aufgrund der unterschiedlichen Länge der Kanäle unterscheiden sich die Laufzeiten von der Öffnung bis zum Sensor, was insbesondere bei pulsierend strömenden Medien zu Problemen führt.

Das US-A-5 443 075 zeigt einen Differenzdrucksensor, der an zwei unterschiedlichen, von einander beabstandeten Sonden angeschlossen ist. Jede der Sonden besteht aus einen Kanal, der in einer Öffnung mündet. Durch die Distanz der beiden Öffnungen der jeweiligen Sonde ergibt sich ein laufzeitabhängiger Druckunterschied.

Bei der von dem US-A-3 355 946 offenbarten Sonde zeigt die Öffnung der Bohrung in Strömungsrichtung des gemessenen Mediums. Ein Fremdkörper in der Strömung würde in die Öffnung eindringen, wodurch ein hohes Risiko besteht, dass die Öffnung durch Fremdkörper blockiert wird.

Es ist Aufgabe der vorliegenden Erfindung, eine Staudrucksonde zu schaffen, bei welcher die Wahrscheinlichkeit, dass Fremdstoffe in die Öffnungen gelangen grundsätzlich durch konstruktive Maßnahmen reduziert ist.

Eine weitere Aufgabe ist es, eine Staudrucksonde zu schaffen, bei welcher ebenfalls durch konstruktive Maßnahmen eine Möglichkeit geschaffen wird, dass Fremdstoffe die dennoch in die Staudrucksonde gelangt sind auf einfachem Wege wieder verlassen können.

Die übergeordnete Aufgabe ist es, die Messgenauigkeit der Staudrucksonde über einen längeren Zeitraum zu gewährleisten, auch wenn sich im gemessenen Fluid Fremdstoffe befinden.

Diese Aufgabe ist erfindungsgemäß gelöst durch die kennzeichnenden Merkmale des Anspruchs 1.

Indem der Differenzdruckerhöher zwischen den Längsachsen der Kanäle und über die Öffnungen der Kanäle herausragend angeordnet ist, berühren durch die Strömung mittransportierte Fremdstoffe zunächst den Differenzdruckerhöher und prallen von ihm ab.

Die Unteransprüche betreffen Weiterbildungen und/oder spezielle Ausgestaltungen der Erfindung.

Die Überlegungen, die zum Entstehen der vorliegenden Erfindung führten gingen davon aus, dass der Druck in jede Richtung wirkt und zum Erfassen des Staudruckes die Öffnung, welche den Staudruck über einen Kanal zum eigentlichen Druckaufnehmer weiterleitet nicht in Richtung der Strömung zeigen muß. Es ist daher ausreichend, wenn dieses Öffnung in der Nähe einer Staufläche angeordnet ist.

Die Anordnung der Öffnungen in einem Winkel zur bei der Messung herrschenden Strömungsrichtung verhindert, dass mitgeführte Fremdstoffe in das Innere der Kanäle gebracht werden.

Die Unteransprüche betreffen Weiterbildungen und/oder spezielle Ausgestaltungen der Erfindung.

Die Überlegungen, die zum Entstehen der vorliegenden Erfindung führten gingen davon aus, dass der Druck in jede Richtung wirkt und zum Erfassen des Staudruckes die Öffnung, welche den Staudruck über einen Kanal zum eigentlichen Druckaufnehmer weiterleitet nicht in Richtung der Strömung zeigen muß. Es ist daher ausreichend, wenn dieses Öffnung in der Nähe einer Staufläche angeordnet ist.

Nachfolgend wird die Erfindung anhand von Zeichnungen näher erläutert.

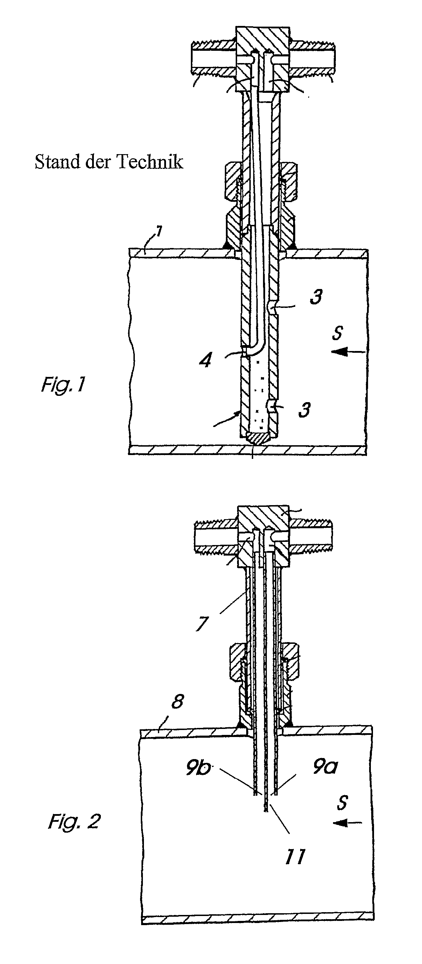

Die Figur 1 zeigt in geschnittener Darstellung einen Staudruckmesser 1 nach dem Stand der Technik, der in ein Rohr 2 ragt. In diesem Rohr 2 bewegt sich ein Medium in Richtung S. Der Staudrucksensor 2 hat Öffnungen 3 entgegen der Strömungsrichtung und eine Öffnung 4 in Strömungsrichtung.

Zwischen den Öffnungen 3 einerseits und der Öffnung 4 andererseits gibt es in bekannter Weise einen Druckunterschied, der von der Strömungsgeschwindigkeit des Mediums abhängt. Fremdstoffe 5 die vom Medium mittransportiert werden, können in die Öffnungen 3 gelangen und fallen dann innerhalb des Staudrucksensors auf den Boden 6 und sammeln sich dort an oder wirbeln innerhalb des Staudrucksensors stochastisch.

Hierdurch kann es zu einer unerwünschten Veränderung der Messcharakteristik des Staudrucksensors kommen.

Die Figur 2 zeigt in geschnittener Darstellung einen erfindungsgemäßen Staudruckmesser 7, der in ein Rohr 8 ragt. In diesem Rohr 8 bewegt sich ebenfalls ein Medium in Richtung S.

Der Strömungsmesser hat zwei Öffnungen 9a und 9b, die im gezeigten Beispiel nach unten gerichtet sind. Die Öffnungen 9a und 9b sind durch einen flächigen Bereich getrennt. Dieser flächige Bereich hat die Funktion eines Differenzdruckerhöhers 11 und kann, um diese Funktion zu erfüllen verschiedene Formen haben. Im gezeigten Beispiel ist dieser Differenzdruckerhöher 11 als ebene Fläche ausgebildet.

Dieses Medium S stößt auf den Differenzdruckerhöher 11. In der Umgebung der Fläche, auf welche das Medium auftrifft entsteht eine Druckerhöhung durch einen Staudruck. Beim Umströmen des Differenzdruckerhöhers 11 erhöht sich in bekannter Weise die Geschwindigkeit des Mediums und dementsprechend herrscht auf der strömungsabgewandten Seite des Differenzdruckerhöhers 11 ein Unterdruck.

Die Öffnungen 9a und 9b sind so angeordnet, dass die Öffnung 9a im Bereich der Druckerhöhung und die Öffnung 9b im Bereich des verminderten Drucks liegt und dass durch das strömende Medium und sein Auftreffen auf dem Differenzdruckerhöher 11 ein Druckunterschied zwischen den beiden Öffnungen 9, 10 entsteht. Dieser Druckunterschied ist von der Strömungsgeschwindigkeit abhängig.

Die Öffnungen 9a und 9b sind jeweils das Ende eines separaten Kanals 10a und 10b, an dessen anderem Ende sich die Sensoren befinden, mit denen der Druckunterschied gemessen wird. Diese Sensoren befinden sich ausserhalb des Rohres 8 und sind hier nicht dargestellt.

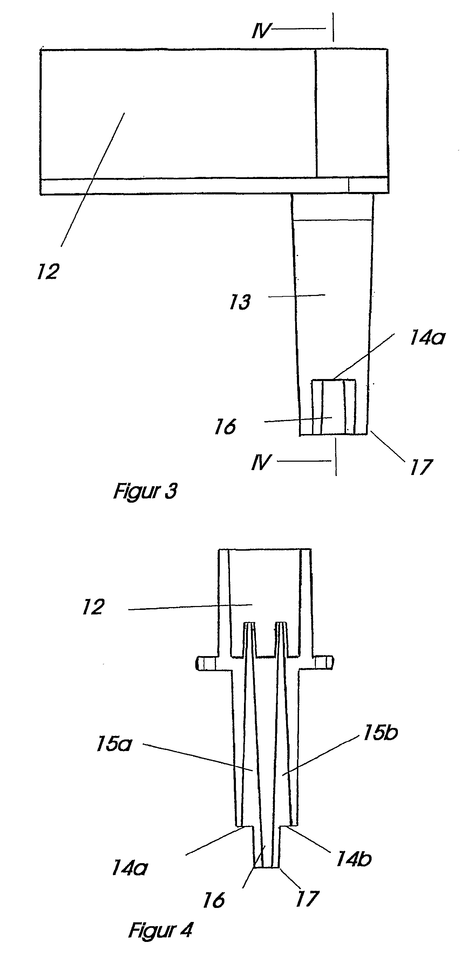

Die Figur 3 zeigt ein mögliches Ausführungsbeispiel eines Staudrucksensors betrachtet aus der Richtung, aus welcher das strömende Medium auftreffen wird.
Der Staudrucksensor hat ein Gehäuse 12 in dem sich der die Drucksensoren befinden. Dieses Gehäuse befindet sich beim Einsatz des Drucksensors ausserhalb des strömenden Mediums. Aus diesem Gehäuse führt nach unten der mit dem Medium in Berührung kommende Teil des Drucksensors, die Sonde 13.

Am unteren Ende der Sonde 13 befinden sich nach unten zeigende Öffnungen. In dieser Ansicht ist nur eine Öffnung 14a sichtbar. Die Sonde 13 hat an ihrem proximalen Ende einem flächigen Bereich, der wie bereits anhand der Figur 2 beschrieben als Differenzdruckerhöher 16 wirkt.

Die Figur 4 zeigt einen Schnitt entlang der Linie IV. In dieser Darstellung sind nun auch die Kanäle 15a und 15b zu sehen, die zu den eigentlichen, hier jedoch nicht gezeigten Drucksensoren im Gehäuse 12 führen. Zwischen den Kanälen ist ein Differenzdruckerhöher 16 angeordnet. Dieser Differenzdruckerhöher 16 ragt zwischen den Kanälen 14a und 14b hervor. Die Strömung S trifft auf den Differenzdruckerhöher 16 und erzeugt einen Staudruck, der über die Öffnung 14a und den Kanal 15a zu einem Drucksensor gelangt.

Der Differenzdruckerhöher 16 hat eine Abrisskante 17. Auf der strömungsabgewandten Seite des Differenzdruckerhöhers 16 entsteht ein Unterdruck. Der Wert dieses Unterdrucks ist durch einen weiteren Drucksensor erfassbar. Dieser Drucksensor befindet sich am anderen Ende des Kanals 15b.

Die Einbaulage des Staudruckmessers erfolgt vorzugsweise so, dass die Staudrucksonde 13 im wesentlichen senkrecht nach unten zeigt. Die Einbaulage bewirkt dass das auftreffende Medium einen Staudruck erzeugt, ohne direkt über die Öffnung 14a in den Kanal 15a gedrückt zu werden.

Sofern von der Strömung mittransportierte Fremdstoffe auf die Sonde 13 treffen berühren sie zunächst den Differenzdruckerhöher 16 und prallen dann von diesem ab.

Die im wesentlichen senkrecht nach unten zeigende Einbaulage bewirkt zudem, dass aufgrund der Schwerkraft werden diese abprallenden Fremdstoffe nach unten fallen und auch nicht durch die Schwerkraft in die Öffnung 14a gelangen.

Sollte etwa aufgrund von auftretenden Wirbeln dennoch ein Fremdstoff über die Öffnung 14 in den Kanal 15 gelangen, so bewirkt der konisch abnehmende Verlauf des Kanals 15, der zum Drucksensor hin immer enger wird, dass die Fremdstoffe immer eine Wandung des Kanals antreffen, diese Wandung verläuft sozusagen "kopfüber" und bietet daher sehr wenig Halt für Ablagerungen sich an der Wandung festzusetzen.

Der Durchmesser der Kanäle 15 ist so bemessen, dass keine Kapillarwirkung bei flüssigen Fremdstoffen entstehen kann.

## Patentansprüche

1. Staudrucksonde mit
- zwei geraden, zueinander parallelen Kanälen (15a, 15b), die durch einen gemeinsamen Differenzdruckerhöher (11, 16) voneinander separiert sind und mit Ihrem einen Ende zu einem Druckmessfühler führen
- einer Öffnung (9a, 9b; 14a, 14b) am jeweils anderen Ende jedes Kanals (15a, 15b), wobei die Öffnungen (9a,9b;14a,14b) an verschiedenen Orten angeordnet sind, zwischen denen ein durch die Wirkung des Differenzdruckerhöhers (11, 16) erzeugter, höherer Wert für den Differenzdruck auftritt, als der Wert des dynamischen Drucks des strömenden Fluids ist,
**dadurch gekennzeichnet, dass**
der Differenzdruckerhöher (11, 16) zwischen den Längsachsen der Kanäle (15a, 15b) und über die Öffnungen (9a, 9b; 14a, 14b) der Kanäle (15a, 15b) herausragend angeordnet ist.

2. Staudrucksonde nach Anspruch 1
**dadurch gekennzeichnet, dass**
der Differenzdruckerhöher (11, 16) eine Abrisskante aufweist.

3. Staudrucksonde nach Anspruch 1 oder 2
**dadurch gekennzeichnet, dass**
der Differenzdruckerhöher (11, 16) eine Wegverlängerung für das strömende Fluid aufweist.

4. Staudrucksonde nach einem der vorangegangenen Ansprüche
**dadurch gekennzeichnet, dass**
die Kanäle (15a, 15b) einen konischen verlaufenden Querschnitt aufweisen und der Querschnitt im Bereich der Öffnungen (14a, 14b) größer ist als an dem Ende des Kanals (15a, 15b), welches zum Druckmessfühler führt.

5. Staudruckmesser umfassend eine Staudrucksonde gemäß einem der Ansprüche 1 bis 5
**dadurch gekennzeichnet, dass**
die Staudrucksonde so in einen geschlossenen oder offenen Kanal eingesetzt ist, dass die Längsachsen der Kanäle (9a, 9b; 15a, 15b) in einem Winkel zur beim Messvorgang herrschenden Strömungsrichtung (S) verlaufen.

## Claims

1. A ram pressure probe, comprising
- two straight ducts (15a, 15b) which are parallel to one another and are separated from one another by a common differential pressure increasing element (11, 16) and which lead with one of their ends to a pressure measuring sensor,
- an opening (9a, 9b; 14a, 14b) at the respective other end of each duct (15a, 15b), wherein the openings (9a, 9b; 14a, 14b) are arranged at different locations between which a value for the differential pressure generated by the effect of the differential pressure increasing element (11, 16) occurs, which value is higher than the value of the dynamic pressure of the flowing fluid,
**characterized in that**
the differential pressure increasing element (11, 16) is arranged between the longitudinal axes of the ducts (15a, 15b) and protrudes beyond the openings (9a, 9b; 14a, 14b) of the ducts (15a, 15b).

2. The ram pressure probe according to claim 1, **characterized in that** the differential pressure increasing element (11, 16) has a trailing edge.

3. The ram pressure probe according to claim 1 or claim 2, **characterized in that** the differential pressure increase element (11, 16) has a path extension for the flowing fluid.

4. The ram pressure probe according to any one of the preceding claims, **characterized in that** the ducts (15a, 15b) have a conically shaped cross-section, and the cross-section is larger in the region of the openings (14a, 14b) than at the end of the duct (15a, 15b) which leads to the pressure measuring sensor.

5. A ram pressure measuring unit, comprising a ram pressure probe according to any of claims 1 to 5, **characterized in that** the ram pressure probe is inserted in a closed or open duct in such a manner that the longitudinal axes of the channels (9a, 9b; 15a, 15b) extend at angle relative to the direction of flow (S) prevailing during the measuring process.

## Revendications

1. Sonde de pression dynamique avec
- deux canaux (15a, 15b) droits parallèles l'un à l'autre qui sont séparés l'un de l'autre par un amplificateur de pression différentielle (11, 16) commun et mènent à l'une de leurs extrémités à un capteur de pression,
- une ouverture (9a, 9b; 14a, 14b) à chaque autre extrémité de chaque canal (15a, 15b), les ouvertures (9a, 9b;14a, 14b) étant disposées à différents endroits entre lesquels apparaît une valeur de pression différentielle produite par l'action de l'amplificateur de pression différentielle (11, 16) qui est supérieure à la valeur de la pression dynamique du fluide affluant,
**caractérisée en ce que** l'amplificateur de pression différentielle (11, 16) est disposé entre les axes longitudinaux des canaux (15a, 15b) et dépassant au-dessus des ouvertures (9a, 9b; 14a, 14b) des canaux (15a, 15b).

2. Sonde de pression dynamique selon la revendication 1 **caractérisée en ce que** l'amplificateur de pression différentielle (11, 16) comporte un bord de détachement.

3. Sonde de pression dynamique selon la revendication 1 ou 2 **caractérisée en ce que** l'amplificateur de pression différentielle (11, 16) comporte une prolongation de voie pour le fluide affluant.

4. Sonde de pression dynamique selon l'une quelconque des revendications précédentes **caractérisée en ce que** les canaux (15a, 15b), comportent une section d'allure conique et la section dans la zone des ouvertures (14a, 14b) est plus grande qu'à l'extrémité du canal (15a, 15b) qui mène au capteur de pression.

5. Capteur de pression dynamique comprenant une sonde de pression dynamique selon l'une quelconque des revendications **caractérisé en ce que** la sonde de pression dynamique est introduite dans un canal fermé ou ouvert de telle sorte que les axes longitudinaux des canaux (9a, 9b; 15a, 15b) passent dans un angle en direction d'écoulement (S) régnant lors du processus de mesure.
